# EUROPÄISCHE PATENTSCHRIFT

(11) **EP 3 589 509 B1**
(45) Veröffentlichungstag und Bekanntmachung des Hinweises auf die Patenterteilung: **31.03.2021**
(21) Anmeldenummer: 18705342.6
(22) Anmeldetag: 05.02.2018
(51) Int. Cl.: B60K 6/387, B60K 6/547, B60K 6/48, B60W 10/06, B60W 10/08, B60W 10/113, B60W 20/40, B60W 20/11, B60W 30/18, B60W 30/192, B60W 50/00

(54) **VERFAHREN ZUM ANSTEUERN EINES HYBRID-ANTRIEBSSTRANGES**
METHOD FOR CONTROLLING A HYBRID DRIVE TRAIN
PROCÉDÉ DE COMMANDE D'UNE CHAÎNE CINÉMATIQUE HYBRIDE

(30) Priorität: 28.02.2017 DE 102017104106
(43) Veröffentlichungstag der Anmeldung: 08.01.2020
(73) Patentinhaber: Magna PT B.V. & Co. KG, 74199 Untergruppenbach (DE)
(72) Erfinder: BLESSING, Uli Christian, 74078 Heilbronn (DE); KNÖPFLE, Philipp, 71636 Ludwigsburg (DE)
(74) Vertreter: Rausch, Gabriele
(86) Internationale Anmeldenummer: PCT/EP2018/052823
(87) Internationale Veröffentlichungsnummer: WO 2018/158046

(56) Entgegenhaltungen:
- DE-A1-102011 018 203
- US-A1- 2005 139 035
- US-A1- 2006 230 855

## Beschreibung

Die vorliegende Erfindung betrifft ein Verfahren zum Ansteuern eines Hybrid-Antriebsstranges eines Kraftfahrzeuges, wobei der Hybrid-Antriebsstrang einen Verbrennungsmotor, eine zum Antrieb des Kraftfahrzeugs dienende elektrische Maschine, ein Doppelkupplungsgetriebe mit einer ersten Reibkupplung und einem der ersten Reibkupplung zugeordneten ersten Teilgetriebe und mit einer zweiten Reibkupplung und einem der zweiten Reibkupplung zugeordneten zweiten Teilgetriebe, sowie einen elektrischen Anlassermotor für den Verbrennungsmotor aufweist, wobei die elektrische Maschine an einen Eingang von dem zweiten Teilgetriebe angeschlossen ist.

Bei einem Hybrid-Antriebsstrang der oben bezeichneten Art kann ein rein elektrischer Fahrbetrieb über das der zweiten Reibkupplung zugeordnete zweite Teilgetriebe erfolgen.

Ferner sind Doppelkupplungsgetriebe der beschriebenen Art allgemein bekannt. Durch das Bereitstellen von zwei Leistungsübertragungspfaden ist es möglich, Gangwechsel ohne Zugkrafteinbruch durchzuführen. Dabei wird das von dem Antriebsmotor bereitgestellte Antriebsmoment durch überschneidende Betätigung der Reibkupplungen von einem Leistungsübertragungspfad auf den anderen zugkraftunterbrechungsfrei übergeben. Diese Art der Ansteuerung eines Doppelkupplungsgetriebes ist insbesondere bei Antriebssträngen bekannt, deren Antriebsmotor ausschließlich ein Verbrennungsmotor ist.

Es ist jedoch auch bekannt, Antriebsstränge für Kraftfahrzeuge zu hybridisieren. Dies beinhaltet generell die Bereitstellung wenigstens einer elektrischen Antriebsmaschine, die in der Regel als elektrischer Motor oder als elektrischer Generator arbeiten kann. In dem Betriebsmodus als elektrische Maschine kann Antriebsleistung zum Fahren des Kraftfahrzeuges bereitgestellt werden. In dem Betriebsmodus als elektrischer Generator kann die elektrische Maschine rekuperierend arbeiten, um beispielsweise bei einem Bremsvorgang elektrische Energie zum Laden eines Energiespeichers zu gewinnen.

Generell ist es in solchen Antriebssträngen bekannt, eine elektrische Maschine zwischen dem Antriebsmotor und dem Doppelkupplungsgetriebe anzuordnen, also in Leistungsflussrichtung vor den Reibkupplungen des Doppelkupplungsgetriebes.

Bei dem eingangs genannten Hybrid-Antriebsstrang ist die elektrische Maschine jedoch innerhalb des Doppelkupplungsgetriebes zumindest zeitweise mit einem Eingang von einem der Teilgetriebe verbunden, also in Leistungsflussrichtung hinter der zugeordneten Reibkupplung. Hierdurch liegt ein Summenpunkt von Antriebsmotor und elektrischer Maschine nicht vor dem Eingang der Doppelkupplungsanordnung, sondern im Getriebe. Hierdurch können die Schaltabläufe eines konventionellen Doppelkupplungsgetriebes ergänzt werden.

Mit einem Hybrid-Antriebsstrang der beschriebenen Art ist ein konventioneller Betrieb möglich, bei dem nur der Verbrennungsmotor aktiv ist, die elektrische Maschine jedoch nicht an den Antriebsstrang angebunden ist oder aber mitgeschleppt wird. Ferner ist ein hybridischer Betriebsmodus möglich, bei dem Antriebsleistung sowohl von dem Verbrennungsmotor als auch von der elektrischen Maschine bereitgestellt wird. Schließlich ist auch ein rein elektrischer Antrieb möglich, bei dem der Verbrennungsmotor abgeschaltet ist bzw. gestoppt ist. Hierbei sind die Reibkupplungen der Doppelkupplungsanordnung in der Regel geöffnet, damit der Verbrennungsmotor nicht mitgeschleppt werden muss.

Im rein elektrischen Antriebsmodus können die herkömmlichen Schaltabläufe eines Doppelkupplungsgetriebes bei dieser Art von Hybrid-Antriebsstrang nicht angewendet werden, da sich die elektrische Maschine auf der Sekundärseite der zugeordneten Reibkupplung befindet.

Aus dem Dokument DE 10 2012 018 416 B4 ist ein Verfahren zum Ansteuern eines derartigen Hybrid-Antriebsstranges bekannt, wobei bei einem Gangwechsel in dem zweiten Teilgetriebe während eines rein elektrischen Fahrbetriebes ein Füllmoment in Form eines Zugkraftunterstützungsmomentes bereitgestellt wird, wobei das Füllmoment aus der Schwungenergie des zuvor angeschleppten, nicht gezündeten Verbrennungsmotors bereitgestellt wird, und wobei der Hybrid-Antriebsstrang ferner einen elektrischen Anlassermotor aufweist, der dazu verwendet wird, um den Antriebsmotor anzuschleppen.

Alternativ ist es aus diesem Dokument bekannt, ein Füllmoment in Form eines Zugkraftunterstützungsmomentes aus einem Antriebsmoment des für den Gangwechsel kurzzeitig gezündeten Verbrennungsmotors bereitzustellen, wobei der Verbrennungsmotor zunächst durch Schließen der ersten oder der zweiten Reibkupplung hochgeschleppt und gezündet wird und wobei das Füllmoment anschließend über den ersten Leistungsübertragungspfad bereitgestellt wird, der die erste Reibkupplung und das erste Teilgetriebe beinhaltet.

Bei Hybrid-Antriebssträngen der oben bezeichneten Art ist es generell möglich, auf einen separaten Anlassermotor komplett zu verzichten. In diesem Fall erfolgt das Anlassen des Verbrennungsmotors immer ausschließlich über die elektrische Antriebsmaschine, wobei das zugeordnete zweite Teilgetriebe in diesem Fall auf Neutral geschaltet wird.

Bei dem eingangs genannten Hybrid-Antriebsstrang ist jedoch ein solcher Anlassermotor vorhanden. Dies hat den Vorteil, dass der Verbrennungsmotor auch dann gestartet werden kann, wenn eine Batterie, die die elektrische Antriebsmaschine speist, entladen ist.

Es versteht sich, dass in diesem Fall für den Anlassermotor vorzugsweise eine separate Batterie bereitgestellt ist, beispielsweise eine Batterie, die ein herkömmliches 12 Volt-Netz in dem Kraftfahrzeug speist, oder ein anderes Niedervolt-Netz. Eine die elektrische Antriebsmaschine speisende Batterie ist in der Regel als Hochvolt-Batterie ausgelegt, die Spannungen von in der Regel mehr als 200 Volt bereitstellt.

Aus dem Dokument EP 2 635 479 B1 ist ein Verfahren zur Auswahl einer Elektromaschine und/oder eines Anlassers zum Anlassen eines Verbrennungsmotors in einem Kraftfahrzeug bekannt, das einen Hybridantrieb mit einem Verbrennungsmotor und einer Elektromaschine, die als Motor betreibbar und zum Anlassen des Verbrennungsmotors verwendbar ist, eine Steuereinrichtung sowie einen zum Anlassen des Verbrennungsmotors verwendbaren Anlasser aufweist. Bei einem bevorstehenden Anlassen des Verbrennungsmotors ist die Steuereinrichtung zur Auswahl der Elektromaschine und/oder des Anlassers in Abhängigkeit wenigstens eines die Fahrdynamikanforderung und/oder die Momentenanforderung an den Hybridantrieb beschreibenden Betriebsparameters des Kraftfahrzeugs und/oder einer Anforderung eines Steuergerätes des Kraftfahrzeuges ausgebildet. Die Auswahl des Anlassers oder der Elektromaschine zum Anlassen des Verbrennungsmotors durch die Steuereinrichtung erfolgt unter Berücksichtigung von wenigstens einem Kennfeld, das einen die Auswahl beeinflussenden Parameter dem eingelegten Gang zuordnet. Hierdurch soll erreicht werden, in allen Fahrsituationen ein möglichst ruckelfreies und schnelles Anlassen des Verbrennungsmotors zu ermöglichen. Generell soll es auch möglich sein, Ladezustände der Batterien zu berücksichtigen, wenn es um die Auswahl eines geeigneten Systems für den Anlassvorgang geht. Auf diese Weise soll letztlich der Anlasser noch als ein "Sicherheitssystem" genutzt werden, so dass selbst bei einer entladenen Hochspannungsbatterie noch ein Starten des Verbrennungsmotors möglich ist.

Aus der US 2006 230 855 A1 ein Verfahren zum Ansteuern eines Hybrid-Antriebstrangs eines Kraftfahrzeugs bekannt. Der Antriebsstrang erhält einen Verbrennungsmotor, eine elektrische Maschine und ein Doppelkupplungsgetriebe mit einer 1. und einer 2. Reibkupplung sowie zugeordneten Teilgetriebe sowie ein elektrischen Anlassermotor für den Verbrennungsmotor. Die elektrische Maschine ist an einen Eingang des 2. Teilgetriebes angeschlossen. Zum Starten des Verbrennungsmotors steht das Kraftfahrzeug und die 2. Reibkupplung ist geöffnet und eine Anfahrt Gangstufe in dem 2. Teilgetriebe eingelegt. Danach wird das 2. Teilgetriebe in ein Neutralzustand geschaltet, wobei die 2. Reibkupplung geschlossen wird und der Verbrennungsmotor mittels elektrischer Maschine gestartet wird.

Aus der US 2005 139 035 A1 ist ein Doppelkupplungsgetriebe bekannt, das das von einem Verbrennungsmotor und einem E-Motor empfangene Drehmoment ändert, und so ein optimales Layout für das Kraftübertragungsschema und die Motorposition bereitgestellt. Ein solches Doppelkupplungsgetriebe ist optimal an ein Hybrid-Elektrofahrzeug angepasst, und es wird auch ein optimales Betriebsverfahren für ein solches Doppelkupplungsgetriebe bereitgestellt, um die Ineffizienz bei der Anwendung eines herkömmlichen CVT auf ein HEV zu überwinden.

Aus der DE 102011018203 A1 ist ein Verfahren zum Betreiben eines Hybrid-Antriebsstranges bekannt, bei dem der Verbrennungsmotor während des Stillstands oder einer kriecht Fahrt des Kraftfahrzeugs mit eingelegter Gangstufe durchgeführt wird.

Das aus dem Dokument EP 2 635 479 B1 bekannte Verfahren basiert auf einem Antriebsstrang, bei dem eine elektrische Antriebsmaschine, die auch zum Anlassen des Verbrennungsmotors verwendbar ist, in Leistungsflussrichtung zwischen einer ersten Trennkupplung und einer Anfahrkupplung einer Getriebeanordnung angeordnet ist. Die Trennkupplung ist dabei zwischen der elektrischen Antriebsmaschine und dem Verbrennungsmotor angeordnet. Die Anfahrkupplung ist Teil eines Getriebes, das zwischen der elektrischen Antriebsmaschine und einem Differential des Antriebsstranges angeordnet ist.

Vor diesem Hintergrund ist es eine Aufgabe der Erfindung, ein verbessertes Verfahren zum Ansteuern eines Hybrid-Antriebsstranges eines Kraftfahrzeuges sowie einen verbesserten Hybrid-Antriebsstrang anzugeben.

Die obige Aufgabe wird gemäß einem ersten Aspekt der Erfindung gelöst durch ein Verfahren zum Ansteuern eines Hybrid-Antriebsstranges eines Kraftfahrzeuges, wobei der Hybrid-Antriebsstrang einen Verbrennungsmotor, eine zum Antrieb des Kraftfahrzeuges dienende elektrische Maschine, ein Doppelkupplungsgetriebe mit einer ersten Reibkupplung und einem der ersten Reibkupplung zugeordneten ersten Teilgetriebe und mit einer zweiten Reibkupplung und einem der zweiten Reibkupplung zugeordneten zweiten Teilgetriebe sowie einen elektrischen Anlassermotor für den Verbrennungsmotor aufweist, wobei die elektrische Maschine an einen Eingang von dem zweiten Teilgetriebe angeschlossen ist und wobei das Verfahren, ausgehend von einem Zustand, bei dem das Kraftfahrzeug steht, bei dem der Verbrennungsmotor gestoppt ist, bei dem wenigstens die zweite Reibkupplung geöffnet ist und bei dem in dem zweiten Teilgetriebe eine Anfahrgangstufe eingelegt ist, die Schritte aufweist:
Erfassen, ob ein Anfahrerschwernisgrund vorliegt,
falls der Anfahrerschwernisgrund vorliegt, Schalten des zweiten Teilgetriebes in einen Neutralzustand, Schließen der zweiten Reibkupplung, Starten des Verbrennungsmotors mittels der elektrischen Maschine, Öffnen der zweiten Reibkupplung und Einlegen der Anfahrgangstufe in dem zweiten Teilgetriebe, und anschließend Abfragen, ob ein Anfahren gewünscht ist, und
falls der Anfahrerschwernisgrund nicht vorliegt, Abfragen, ob ein Anfahren gewünscht ist.

Gemäß einem zweiten Aspekt, der sich an das obige Verfahren anschließen kann, wird die obige Aufgabe gelöst durch ein Verfahren zum Anfahren eines Kraftfahrzeuges, das einen Hybrid-Antriebsstrang aufweist, der einen Verbrennungsmotor, eine zum Antrieb des Kraftfahrzeuges dienende elektrische Maschine, ein Doppelkupplungsgetriebe mit einer ersten Reibkupplung und einem der ersten Reibkupplung zugeordneten ersten Teilgetriebe und mit einer zweiten Reibkupplung und mit einem der zweiten Reibkupplung zugeordneten zweiten Teilgetriebe sowie einen elektrischen Anlassermotor für den Verbrennungsmotor aufweist, wobei die elektrische Maschine an einen Eingang des zweiten Teilgetriebes angeschlossen ist, wobei das Verfahren, ausgehend von einem Zustand, bei dem das Kraftfahrzeug mittels der elektrischen Maschine angefahren wird und bereits eine Schrittgeschwindigkeit in einem Bereich größer als 0,5 km/h und kleiner als 7 km/h hat und bei dem der Verbrennungsmotor gestoppt ist, die Schritte aufweist:
Abfragen, ob ein Start des Verbrennungsmotors gefordert ist,
Erfassen, ob ein Leistungsanforderungssignal größer ist als ein Leistungs-Schwellenwert, und, falls ja, Starten des Verbrennungsmotors mittels des Anlassermotors, und/oder Erfassen, ob die Geschwindigkeit des Kraftfahrzeuges einen Anschlepp-Schwellenwert überschritten hat, und, falls ja, Starten des Verbrennungsmotors durch Anschleppen, indem die zweite Reibkupplung geschlossen wird und/oder in dem ersten Teilgetriebe eine Anschlepp-Gangstufe eingelegt und anschließend die erste Reibkupplung geschlossen wird.

Schließlich wird die obige Aufgabe durch einen Hybrid-Antriebsstrang für ein Kraftfahrzeug gelöst, der einen Verbrennungsmotor, eine zum Antrieb des Kraftfahrzeuges dienende elektrische Maschine, ein Doppelkupplungsgetriebe mit einer ersten Reibkupplung und einem der ersten Reibkupplung zugeordneten ersten Teilgetriebe und mit einer zweiten Reibkupplung und einem der zweiten Reibkupplung zugeordneten zweiten Teilgetriebe sowie einen elektrischen Anlassermotor für den Verbrennungsmotor aufweist, wobei die elektrische Maschine an einen Eingang von dem zweiten Teilgetriebe angeschlossen ist, und mit einem Steuergerät, das dazu ausgelegt und dazu eingerichtet ist, ein erfindungsgemäßes Verfahren durchzuführen.

Bei dem erfindungsgemäßen Verfahren gemäß dem ersten Aspekt wird von einem Zustand ausgegangen, bei dem das Kraftfahrzeug steht, bei dem der Verbrennungsmotor gestoppt ist, bei dem die zweite Reibkupplung geöffnet ist und bei dem in dem zweiten Teilgetriebe eine Anfahrgangstufe eingelegt ist. Dieser Ausgangszustand ist darauf optimiert, dass zum Anfahren primär die elektrische Maschine verwendet wird.

Bei diesem Ausgangszustand handelt es sich typischerweise um einen Zustand, der entweder vor oder nach dem Einschalten einer Zündung des Kraftfahrzeuges eingerichtet ist. Mit anderen Worten liegt der Ausgangszustand in der Regel dann vor, wenn das Kraftfahrzeug nach einem Abstellen wieder in Betrieb genommen werden soll, um eine Fahrt anzutreten.

Demzufolge wird vor dem Erfassen, ob ein Anfahrerschwernisgrund vorliegt, vorzugsweise erfasst, ob die Zündung des Kraftfahrzeuges eingeschaltet worden ist, so dass der Schritt des Erfassens, ob ein Anfahrerschwernisgrund vorliegt, erst dann durchgeführt wird, wenn die Zündung des Kraftfahrzeuges eingeschaltet worden ist.

Unter einem Anfahrerschwernisgrund wird generell ein Zustand verstanden, der impliziert, dass zum Anfahren voraussichtlich überdurchschnittlich viel Antriebsleistung gefordert sein wird.

Falls gemäß dem ersten Aspekt der Erfindung ein solcher Anfahrerschwernisgrund vorliegt, wird der Ausgangszustand, der darauf hin optimiert ist, dass ein Anfahren alleine mittels der elektrischen Antriebsmaschine erfolgen kann, zum Teil wieder aufgehoben, um die elektrische Antriebsmaschine zunächst, d.h. vor dem Anfahren, zum Starten des Verbrennungsmotors zu nutzen.

Nach dem Starten des Verbrennungsmotors wird wieder der Ausgangszustand hergestellt, wobei die zweite Reibkupplung geöffnet ist und in dem zweiten Teilgetriebe die Anfahrgangstufe eingelegt wird.

Anschließend wird generell abgefragt, ob ein Anfahren gewünscht ist. Dies kann beispielsweise dadurch erfolgen, dass ein Bremspedal darauf überprüft wird, ob dieses gelöst worden ist. Wenn das Bremspedal gelöst worden ist, wird davon ausgegangen, dass ein Anfahren gewünscht ist.

Sofern kein Anfahrerschwernisgrund vorliegt, wird direkt auf diese Art und Weise abgefragt, ob ein Anfahren gewünscht ist. Mit anderen Worten wird der Verbrennungsmotor in diesem Fall vorzugsweise nicht vorab gestartet.

Durch die Maßnahme, dass der Verbrennungsmotor gestartet wird, wenn der Anfahrerschwernisgrund vorliegt, und zwar vor dem eigentlichen Anfahren, kann der Antriebsstrang in optimaler Weise auf ein erschwertes Anfahren vorbereitet werden. In manchen Fällen mag es dennoch genügen, alleine mittels der elektrischen Antriebsmaschine anzufahren. In anderen Fällen kann jedoch der Verbrennungsmotor schnell und unkompliziert zugeschaltet werden, um notwendige zusätzliche Antriebsleistung für das erschwerte Anfahren bereitzustellen.

Zudem wird hierdurch der Vorteil erzielt, dass es dann, wenn bereits angefahren worden ist, und wenn anschließend eine hohe Antriebsleistung gefordert wird, beispielsweise aufgrund des Anfahrerschwernisgrundes, es nicht notwendig ist, den Anlassermotor zum Starten des Verbrennungsmotors zu verwenden.

Durch das prädiktive bzw. vorbereitende Anlassen des Verbrennungsmotors bei Vorliegen des Anfahrerschwernisgrundes kann folglich verhindert werden, dass der Anlasser unnötig häufig verwendet wird.

Durch diese Maßnahme kann die Anzahl der Starts mit dem Anlassermotor reduziert werden. Dies kann zu vereinfachten oder kostengünstigen Anlassermotoren führen, so dass insgesamt Kosten gespart werden können.

Die Fahrbarkeit des Kraftfahrzeuges bleibt jedoch in gleicher Weise erhalten wie bei herkömmlichen Anfahrstrategien.

Das zweite Teilgetriebe des Doppelkupplungsgetriebes ist vorzugsweise jenes Getriebe, das den geraden Vorwärtsgangstufen zugeordnet ist. Die Anfahrgangstufe, die dann im Rahmen des erfindungsgemäßen Verfahrens in dem zweiten Teilgetriebe eingelegt wird, ist vorzugsweise die Vorwärtsgangstufe 2. Das zweite Teilgetriebe kann jedoch auch den ungeraden Vorwärtsgangstufen zugeordnet sein.

Sofern ein Anfahren über den Verbrennungsmotor erfolgen soll, so wird dies vorzugsweise unter Verwendung des ersten Teilgetriebes durchgeführt, in dem die Vorwärtsgangstufe 1 als Anfahrgangstufe ausgewählt wird.

Bei dem Verfahren gemäß dem zweiten Aspekt wird von einem Zustand ausgegangen, bei dem das Kraftfahrzeug bereits mittels der elektrischen Maschine angefahren worden ist und folglich eine Schrittgeschwindigkeit hat, die in einem Bereich liegt, der größer ist als 0,5 km/h und kleiner ist als 7 km/h. Ferner wird davon ausgegangen, dass der Verbrennungsmotor gestoppt ist.

Dieses Verfahren geht also vorzugsweise davon aus, dass bei dem Anfahren des Kraftfahrzeuges kein Anfahrerschwernisgrund vorgelegen hat.

Während sich das Kraftfahrzeug und der Hybrid-Antriebsstrang in diesem Ausgangszustand befinden, wird gemäß dem zweiten Aspekt generell in einer Schleife abgefragt, ob ein Start des Verbrennungsmotors gefordert ist. Dies kann aus verschiedenen Gründen der Fall sein, beispielsweise äußere Fahrumstände, Zustände des Antriebsstranges (Batterieladezustand, Leistungsanforderung durch einen Fahrer, etc). Wenn der Start des Verbrennungsmotors nicht gefordert ist, wird weiter mittels der elektrischen Antriebsmaschine angefahren bzw. beschleunigt.

Wenn hingegen erfasst worden ist, dass ein Start des Verbrennungsmotors gefordert ist, wird in einem nächsten Schritt zunächst erfasst, ob ein Leistungsanforderungssignal größer ist als ein Leistungs-Schwellenwert. Wenn dies der Fall ist, wird der Verbrennungsmotor mittels des Anlassers gestartet. Alternativ und/oder zusätzlich wird erfasst, ob die Geschwindigkeit des Kraftfahrzeuges einen Anschlepp-Schwellenwert überschritten hat. Wenn dies der Fall ist, wird der Verbrennungsmotor durch Anschleppen gestartet. Dies erfolgt, indem die zweite Reibkupplung geschlossen wird und/oder indem in dem ersten Teilgetriebe eine Anschlepp-Gangstufe eingelegt und anschließend die erste Reibkupplung geschlossen wird.

Mit anderen Worten wird bei dem Verfahren gemäß dem zweiten Aspekt für den Fall, dass ein Start des Verbrennungsmotors gefordert ist, abgefragt, ob das Leistungsanforderungssignal größer ist als ein Leistungs-Schwellenwert. Daher wird der Verbrennungsmotor in diesem Zustand, bei dem das Fahrzeug bereits mittels der elektrischen Antriebsmaschine angefahren ist, vorzugsweise mittels des Anlassers gestartet. Wenn hingegen nach der Abfrage, ob ein Start des Verbrennungsmotors gefordert ist, das Kraftfahrzeug einen Anschlepp-Schwellenwert überschritten hat, dann erfolgt das Starten des Verbrennungsmotors vorzugsweise durch Anschleppen, so dass auf einen Start mittels des Anlassermotors verzichtet werden kann. Auch hierdurch kann die Anzahl der Starts mittels des Anlassermotors reduziert werden.

Wenn nach dem Erfassen, dass ein Start des Verbrennungsmotors gefordert ist, festgestellt wird, dass das Leistungsanforderungssignal kleiner einem Leistungs-Schwellenwert ist, wird vorzugsweise weiter mittels der elektrischen Maschine angefahren, und zwar vorzugsweise so lange, bis die Geschwindigkeit des Kraftfahrzeuges den Anschlepp-Schwellenwert überschritten hat, so dass anschließend ein Starten des Verbrennungsmotors durch Anschleppen erfolgen kann.

Mit anderen Worten kann hierdurch vorzugsweise erreicht werden, dass nach dem Erfassen der Forderung eines Verbrennungsmotorstarts dieser Start noch so lange verzögert wird, bis der Anschlepp-Schwellenwert erreicht worden ist.

Der Anschlepp-Schwellenwert kann beispielsweise dem Wert von 7 km/h entsprechen.

Die Anschlepp-Gangstufe ist vorzugsweise die höchste Gangstufe in dem ersten Teilgetriebe, also beispielsweise bei einem Getriebe mit sieben Vorwärtsgangstufen die Vorwärtsgangstufe 7.

Wenn in der Abfrage, ob die Geschwindigkeit des Kraftfahrzeuges einen Anschlepp-Schwellenwert überschritten hat, festgestellt wird, dass dies noch nicht der Fall ist, wird generell weiter mittels der elektrischen Antriebsmaschine beschleunigt.

Die Aufgabe wird somit vollkommen gelöst.

Bei dem ersten Aspekt der Erfindung ist es bevorzugt, wenn nach dem Erfassen eines Anfahrwunsches abgefragt wird, ob ein Leistungsanforderungssignal größer ist als ein Leistungs-Schwellenwert, und falls ja, wenn dann der Verbrennungsmotor mittels des Anlassermotors gestartet wird und das Kraftfahrzeug durch Schließen der ersten Reibkupplung angefahren wird.

Hierbei wird davon ausgegangen, dass in dem ersten Teilgetriebe eine geeignete Anfahrgangstufe (beispielsweise Anfahrgangstufe 1) eingelegt ist und die erste Reibkupplung in der Regel nur geschlossen werden muss, um den Anfahrvorgang durchzuführen.

Das Anfahren mittels des Verbrennungsmotors kann ggf. durch eine Boost-Wirkung unterstützt werden, indem die elektrische Antriebsmaschine über die Anfahrgangstufe in dem zweiten Teilgetriebe zusätzlich Antriebsleistung bereitstellt, und/oder bei einem in neutral geschalteten zweiten Teilgetriebe über die zweite Reibkupplung und über die erste Reibkupplung, d.h. auch über den ersten Leistungsübertragungszweig.

Gemäß einer weiteren bevorzugten Ausführungsform wird dabei für den Fall, dass das Leistungsanforderungssignal nicht größer ist als der Leistungs-Schwellenwert, das Kraftfahrzeug mittels der elektrischen Maschine über eine Anfahrgangstufe in dem zweiten Teilgetriebe angefahren.

Die Anfahrgangstufe in dem zweiten Teilgetriebe ist vorzugsweise die unterste gerade Vorwärtsgangstufe 2.

Ferner ist es bei dem ersten Aspekt der Erfindung insgesamt vorteilhaft, wenn der Anfahrerschwernisgrund vorliegt, wenn ein Gewicht des Kraftfahrzeuges größer ist als ein Gewichts-Schwellenwert und/oder wenn eine Steigung der Fahrbahn, auf der das Kraftfahrzeug steht, größer ist als ein Steigungs-Schwellenwert, und/oder wenn ein Alter einer den Anlassermotor speisenden Batterie größer ist als ein Alters-Schwellenwert und/oder wenn ein Alter einer die elektrische Antriebsmaschine speisenden Batterie größer ist als ein Alters-Schwellenwert und/oder wenn eine Anzahl von Verbrennungsmotor-Starts mittels des Anlassermotors größer ist als ein Anlasserstartanzahl-Schwellenwert und/oder wenn eine Sonderbedingung vorliegt.

Ein Gewicht des Kraftfahrzeuges kann beispielsweise indirekt ermittelt werden durch Erfassung von Signalen von Sitzbelegungssensoren und/oder von Gurtsensoren. Ferner ist es auch denkbar, auf das Gewicht zu schließen über eine Auslenkung von Federbeinen, also über Fahrwerksensoren oder dergleichen.

Wenn das Fahrzeug sehr schwer ist, wird davon ausgegangen, dass ein Anfahren erschwert ist, so dass dann gemäß dem ersten Aspekt der Erfindung prophylaktisch bzw. vorausschauend der Verbrennungsmotor gestartet wird, bevor das Anfahren erfolgen soll.

Weiterhin liegt eine Anfahrerschwernis vor, wenn das Fahrzeug an einer signifikanten Steigung steht, also bergauf anfahren muss.

Ein weiterer Zustand, der das Anfahren erschweren kann, kann darin liegen, wenn ein Alter einer den Anlassermotor speisenden Batterie größer ist als ein Alters-Schwellenwert.

In diesem Zustand kann davon ausgegangen werden, dass ein ggf. notwendiges Starten mittels des Anlassers nicht erreichbar bzw. nicht möglich sein kann.

Gemäß einer weiteren Option ist es denkbar, einen Anfahrerschwernisgrund festzustellen, wenn ein Alter einer die elektrische Maschine speisenden Batterie größer ist als ein Alters-Schwellenwert.

In diesem Fall ist es in manchen Fällen einfacher, den Verbrennungsmotor vor dem Anfahren des Kraftfahrzeuges zu starten, um das Anfahren des Kraftfahrzeuges ggf. durch den Verbrennungsmotor unterstützen zu können.

Weiterhin ist es denkbar, dass man auf die Anlasserstartanzahl abstellt. Wenn der Anlasser eine vorbestimmte Anzahl von Anlasserstarts vollzogen hat, wird davon ausgegangen, dass der Anlasser möglicherweise dem Ende seiner Lebensdauer entgegentritt. In diesem Fall wird auch der Verbrennungsmotor prophylaktisch angelassen bzw. gestartet, um einen ggf. notwendigen Start mittels des Anlassermotors von vornherein vermeiden zu können.

Ein weiterer Anfahrerschwernisgrund kann in einer sog. Sonderbedingung vorliegen.

Dies kann ein Signal eines Steuergerätes sein, eine weitere individuelle Bedingung, etc.

Die unterschiedlichen Anfahrerschwernisgründe können bei dem Schritt, bei dem erfasst wird, ob ein Anfahrerschwernisgrund vorliegt, entweder individuell abgefragt werden. In diesem Fall liegt ein Anfahrerschwernisgrund vor, wenn einer der oben aufgelisteten Anfahrerschwernisgründe vorliegt. In manchen Fällen können jedoch auch zwei oder mehr derartige Anfahrerschwernisgründe miteinander gekoppelt werden, so dass ein Anfahrerschwernisgrund nur dann vorliegt, wenn diese zwei oder mehr Anfahrerschwernisgründe gleichzeitig vorliegen. Beispielsweise kann ein Anfahrerschwernisgrund in diesem Fall dann vorliegen, wenn das Gewicht des Kraftfahrzeuges größer ist als ein Gewichts-Schwellenwert und wenn gleichzeitig eine Steigung einer Fahrbahn größer ist als ein Steigungs-Schwellenwert. Ein Anfahrerschwernisgrund kann jedoch generell auch dann vorliegen, wenn bereits ein einzelner der obigen Anfahrerschwernisgründe zutrifft. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung einer Ausführungsform eines erfindungsgemäßen Hybrid-Antriebsstranges;
Fig. 2 ein schematisches Flussdiagramm einer Ausführungsform eines erfindungsgemäßen Verfahrens zum Ansteuern eines Hybrid-Antriebsstranges gemäß einem ersten Aspekt der Erfindung; und
Fig. 3 ein schematisches Flussdiagramm eines Verfahrens zum Ansteuern eines Hybrid-Antriebsstranges gemäß einem zweiten Aspekt.

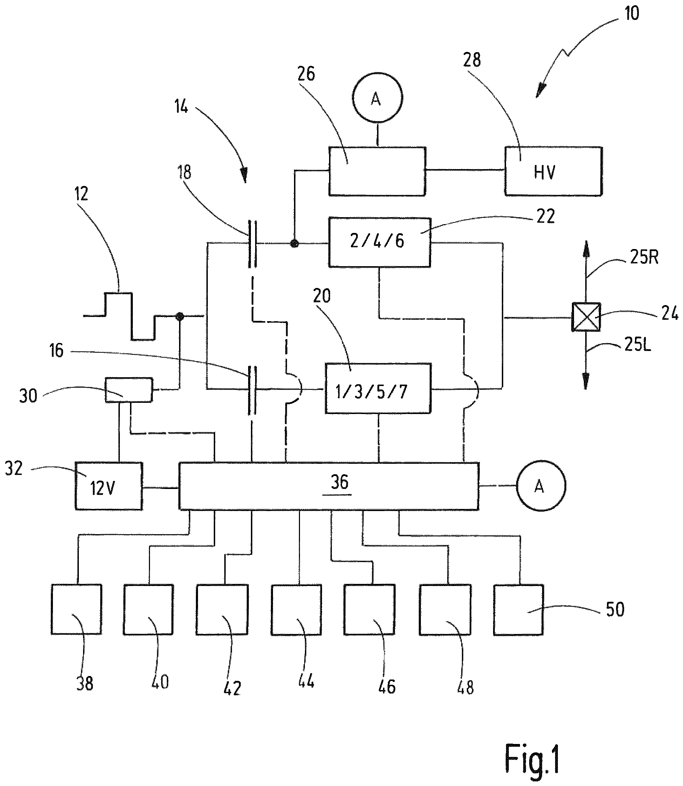

In Fig. 1 ist in schematischer Form ein Antriebsstrang für ein Kraftfahrzeug dargestellt und generell mit 10 bezeichnet.

Der Antriebsstrang 10 weist einen Antriebsmotor 12 in Form eines Verbrennungsmotors auf. Ferner beinhaltet der Antriebsstrang 10 ein Doppelkupplungsgetriebe mit einer Doppelkupplungsanordnung 14. Die Doppelkupplungsanordnung 14 weist eine erste Reibkupplung 16 und eine zweite Reibkupplung 18 auf. Die erste und die zweite Reibkupplung 16, 18 weisen ein gemeinsames Eingangsglied auf, das mit dem Verbrennungsmotor 12 verbunden ist.

Das Doppelkupplungsgetriebe des Antriebsstranges 10 beinhaltet ferner ein erstes Teilgetriebe 20, das den ungeraden Vorwärtsgangstufen 1, 3, 5, 7, etc. zugeordnet ist, sowie ein zweites Teilgetriebe 22, das den geraden Vorwärtsgangstufen 2, 4, 6, etc. zugeordnet ist. Ein Ausgangsglied der ersten Reibkupplung 16 ist mit einem Eingang des ersten Teilgetriebes 20 verbunden. Ein Ausgangsglied der zweiten Reibkupplung 18 ist mit einem Eingang des zweiten Teilgetriebes 22 verbunden.

Die Teilgetriebe 20, 22 sind so ausgelegt, dass sie jeweils entweder in eine der mit diesem jeweiligen Teilgetriebe realisierten Gangstufen geschaltet werden können, oder aber in Neutral geschaltet werden können. Zum Schalten beinhalten die Teilgetriebe 20, 22 gewöhnlich sog. Schaltkupplungen, insbesondere synchronisierte Schaltkupplungen.

Das erste Teilgetriebe 20 und das zweite Teilgetriebe 22 weisen einen gemeinsamen Getriebeausgang auf, der mit einem Differential 24 verbunden ist, mittels dessen Antriebsleistung auf angetriebene Räder 25L, 25R verteilbar ist.

Der Antriebsstrang 10 ist als Hybrid-Antriebsstrang ausgebildet und beinhaltet eine elektrische Antriebsmaschine 26, die zum Antrieb des Kraftfahrzeuges dient. Die elektrische Maschine 26 ist mit einer Hochvoltbatterie 28 verbunden, die eine elektrische Spannung von mehr als 200 Volt bereitstellt. Die elektrische Maschine 26 beinhaltet ferner eine Leistungselektronik, die dazu ausgebildet ist, die elektrische Maschine 26 anzusteuern, wie es allgemein bekannt ist.

Die elektrische Maschine 26 ist mit dem Eingang des zweiten Teilgetriebes 22 verbunden, ist also auf der Sekundärseite der zweiten Reibkupplung 18 an das Doppelkupplungsgetriebe angeschlossen.

Der Antriebsstrang 10 weist ferner einen Anlassermotor 30 auf, der mit einer Niedervoltbatterie 32 verbunden ist, beispielsweise einer 12 Volt-Batterie 32 herkömmlicher Bauart.

Der Anlassermotor 30 ist vorzugsweise ausschließlich als Motor betreibbar (nicht als Generator) und ist mit dem Verbrennungsmotor 12 verbunden bzw. mit dem gemeinsamen Eingangsglied der zwei Reibkupplungen 16, 18.

Der Antriebsstrang 10 beinhaltet ferner ein Steuergerät 36, das in an sich bekannter Weise einen Mikroprozessor, Speicher und andere elektronische Bauteile wie Eingabe/Ausgabeeinheiten beinhaltet. Wie es in Fig. 1 schematisch dargestellt ist, ist das Steuergerät 36 zum einen mit nicht näher dargestellten Aktuatoren zum Betätigen der zwei Reibkupplungen 16, 18 verbunden, sowie mit nicht näher dargestellten Aktuatoren zum Betätigen von Schaltkupplungen der zwei Teilgetriebe 20, 22 verbunden.

Ferner ist das Steuergerät 36 mit der elektrischen Antriebsmaschine 26 verbunden, um diese anzusteuern, bzw. mit deren Leistungselektronik, wie es bei A in Fig. 1 gezeigt ist.

Schließlich ist das Steuergerät 36 auch mit dem elektrischen Anlassermotor 30 verbunden, um diesen bedarfsweise anzusteuern, um den Verbrennungsmotor 12 zu starten.

Das Steuergerät 36 ist dazu ausgelegt, verschiedene Betriebsmodi einzurichten, einschließlich eines verbrennungsmotorischen Fahrbetriebes, eines Hybrid-Fahrbetriebes und eines rein elektrischen Fahrbetriebes.

Zudem ist das Steuergerät 36 mit einer Vielzahl von Sensoren verbunden, von denen einige beispielhaft dargestellt sind, einschließlich eines Bremspedalsensors 38, eines Gaspedalsensors 40, eines Sitzbelegungssensors 42, eines Gurtsensors 44, eines Anlasserstartzählers 46, eines Batteriealterssensors 48 und eines Steigungssensors 50.

Die Sensoren können dazu verwendet werden, um in dem Steuergerät 36 festzustellen, ob ein Anfahrerschwernisgrund vorliegt.

Falls ein derartiger Anfahrerschwernisgrund vorliegt, wird nach einem Einschalten des Hybrid-Antriebsstranges 10 (beispielsweise mittels eines Zündschlüssels) vor einem Anfahren vorbereitend bzw. prophylaktisch der Verbrennungsmotor 12 gestartet, auch wenn das Anfahren des Kraftfahrzeuges mittels des Hybrid-Antriebsstranges 10 vorzugsweise rein elektrisch mittels der elektrischen Antriebsmaschine 26 erfolgt.

Ferner kann das Steuergerät 36 dazu ausgelegt sein, ausgehend von einem Modus, bei dem mittels der elektrischen Antriebsmaschine 26 in Schrittgeschwindigkeit gefahren wird, zu erfassen, ob der Start des Verbrennungsmotors gefordert ist und diesen ggf. mittels des Anlassers zu starten oder aber den Verbrennungsmotor durch Anschleppen zu starten, sobald der Bereich der Schrittgeschwindigkeit überschritten ist.

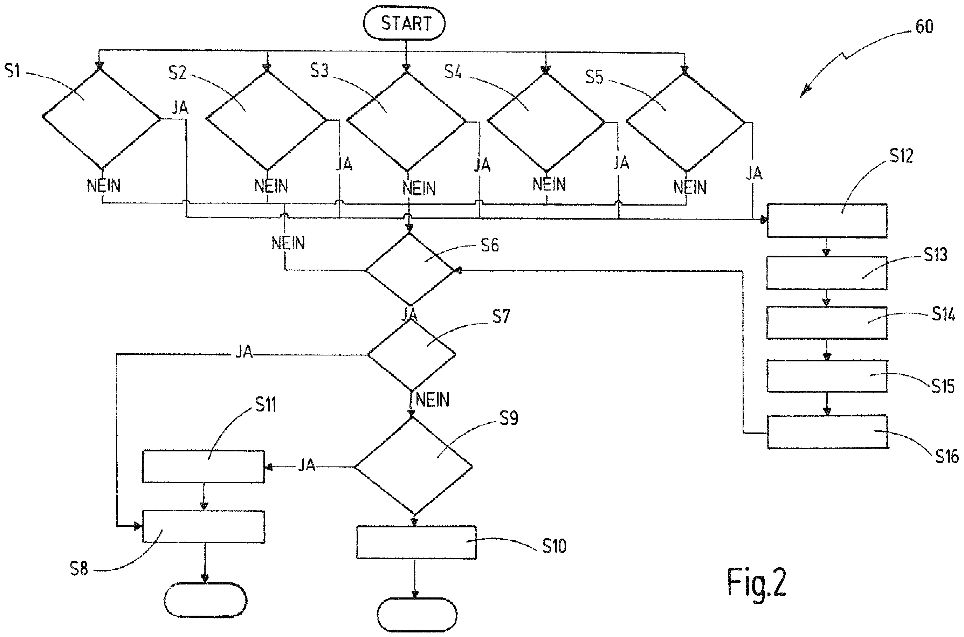

Ein Verfahren zum Ansteuern des Hybrid-Antriebsstranges 10 gemäß einem Ausführungsbeispiel der Erfindung ist in Fig. 2 generell mit 60 bezeichnet.

Das Verfahren 60 geht aus von einem Startzustand, bei dem das Kraftfahrzeug steht, bei dem der Verbrennungsmotor 12 gestoppt ist, bei dem wenigstens die zweite Reibkupplung 18 geöffnet ist und bei dem in dem zweiten Teilgetriebe 22 eine Anfahrgangstufe eingelegt ist, insbesondere die Vorwärtsgangstufe 2. Ferner beginnt das Verfahren 60 mit dem Start dann, wenn der Hybrid-Antriebsstrang 10 eingeschaltet worden ist, beispielsweise über einen Zündschlüssel oder dergleichen.

Nach dem Start werden parallel unter Verwendung der oben erwähnten Sensoren diverse Abfragen durchgeführt, in denen erfasst wird, ob ein Anfahrerschwernisgrund vorliegt.

So wird im Schritt S1 abgefragt, ob aus Sondergründen ein Anfahrerschwernisgrund vorliegt.

Parallel dazu wird nach dem Start im Schritt S2 abgefragt, ob ein Fahrzeuggewicht größer ist als ein Gewichts-Schwellenwert. Der Gewichts-Schwellenwert kann beispielsweise so eingestellt sein, dass er auf einen bestimmten Prozentsatz des zulässigen Gesamtgewichtes des Kraftfahrzeuges eingestellt ist oder auf einen bestimmten Prozentsatz der zulässigen Zuladung. Beispielhaft wird als Gewichts-Schwellenwert die halbe zulässige Zuladung angegeben, also das Grundgewicht des Fahrzeuges plus der halben zulässigen Zuladung.

Das Fahrzeuggewicht kann entweder durch eine übergeordnete Sensorik erfasst werden, oder aber beispielsweise durch eine Abfrage der Sitzbelegungssensoren 42 und/oder der Gurtsensoren 44, um festzustellen, mit wie viel Personen das Fahrzeug besetzt ist. Alternativ hierzu kann auch eine Sensorik des Fahrwerkes verwendet werden, die ggf. eine aktuelle Zuladung erfassen kann.

Parallel zu den Schritten S1 und S2 wird in einem Schritt S3 abgefragt, ob eine Steigung einer Fahrbahn, auf der das Kraftfahrzeug steht, größer ist als ein Steigungs-Schwellenwert. Die Steigung ist in diesem Fall als positive Steigung anzusehen, wenn also das Fahrzeug in Vorwärtsfahrt anschließend bergauf fahren muss. Der Steigungs-Schwellenwert kann beispielsweise in einem Bereich von 2 % bis 15 % liegen und liegt vorzugsweise in einem Bereich von 2,5 % bis 5 %.

Parallel zu den Schritten S1, S2, S3 wird in einem Schritt S4 abgefragt, ob ein Alter einer Batterie größer ist als ein Alters-Schwellenwert. Bei der Batterie kann es sich um die Niedervoltbatterie 32 und/oder um die Hochvoltbatterie 28 handeln.

Parallel zu den Schritten S1 bis S4 wird in einem Schritt S5 nach dem Start abgefragt, ob eine Anzahl von Verbrennungsmotor-Starts mittels des Anlassermotors 30 größer ist als ein Anlasserstartanzahl-Schwellenwert. Der Anlasserstartanzahl-Schwellenwert kann beispielsweise in einem Bereich von 1000 bis 5000 liegen.

Sofern in allen Abfragen S1 bis S5 festgestellt worden ist, dass kein Anfahrerschwernisgrund vorliegt, geht das Verfahren 60 über zum Schritt S6, in dem abgefragt wird, ob ein Anfahren gewünscht ist, beispielsweise durch Ermitteln der Position des Bremspedalsensors 38, ob also eine Bremse gelöst worden ist.

Wenn dies nicht der Fall ist, geht das Verfahren 60 in einer Schleife zurück zum Schritt S6.

Wenn ein Anfahren gewünscht ist (also beispielsweise das Bremspedal gelöst worden ist), wird in einem Schritt S7 abgefragt, ob der Verbrennungsmotor bereits läuft. Wenn dies der Fall ist, kann ein Anfahren mittels des Verbrennungsmotors 12 über die erste Reibkupplung 16 erfolgen, wobei in dem ersten Teilgetriebe 20 eine Anfahrgangstufe eingelegt ist, in der Regel die Vorwärtsgangstufe 1. Dies erfolgt im Schritt S8. Anschließend ist das Verfahren beendet.

Sofern hingegen im Schritt S7 festgestellt wird, dass der Verbrennungsmotor nicht läuft, wird in einer darauffolgenden Abfrage S9 abgefragt, ob ein Leistungsanforderungssignal größer ist als ein Leistungs-Schwellenwert, ob also beispielsweise eine Stellung des Gaspedals größer ist als ein Schwellenwert, was mittels des Gaspedalsensors 40 ermittelbar ist. Diese Abfrage kann beispielsweise ähnlich sein einer Kick-down-Abfrage. Wenn das Leistungsanforderungssignal größer ist als der Leistungs-Schwellenwert, geht das Verfahren über zum Schritt S11, bei dem der Verbrennungsmotor 12 mittels des Anlassers 30 gestartet wird und anschließend in dem darauffolgenden Schritt S8 über die erste Reibkupplung 16 angefahren wird, wie oben beschrieben.

Das Anfahren mittels des Verbrennungsmotors 12 über den ersten Leistungsübertragungsstrang (Reibkupplung 16 und Teilgetriebe 20) kann ggf. durch einen Boost-Betrieb mittels der elektrischen Antriebsmaschine 26 unterstützt werden, in diesem Fall beispielsweise über das zweite Teilgetriebe 22 und die dort eingelegte Anfahrgangstufe 2.

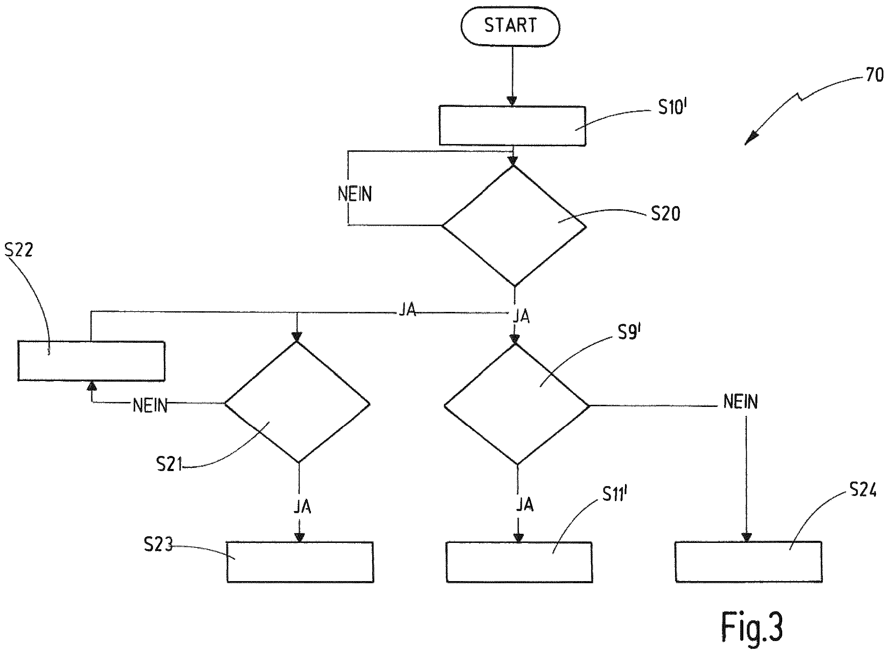

Sofern das Leistungsanforderungssignal nicht größer ist als der Leistungs-Schwellenwert, wird das Kraftfahrzeug in Schritt S10 mittels der elektrischen Antriebsmaschine 26 angefahren, und zwar über eine in dem zweiten Teilgetriebe 22 eingelegte Anfahrgangstufe (in der Regel Gangstufe 2). Der Verbrennungsmotor kann dabei gestoppt sein oder kann dabei laufen. Das mit dem Schritt S10 angegebene Anfahren über die elektrische Antriebsmaschine 26 wird nachstehend in größerer Genauigkeit unter Bezugnahme auf Fig. 3 beschrieben werden.

Sofern in einer der Abfragen S1 bis S5 oder in mehreren dieser Abfragen ein Anfahrerschwernisgrund erfasst worden ist, geht das Verfahren 60 danach nicht über zum Schritt S6, sondern geht über zum Schritt S12.

Im Schritt S12 wird die Anfahrgangstufe in dem zweiten Teilgetriebe 22 ausgelegt, so dass das zweite Teilgetriebe 22 in einen Neutralzustand geschaltet wird. Anschließend wird im Schritt S13 die zweite Reibkupplung 18 geschlossen.

Im darauffolgenden Schritt S14 wird der Verbrennungsmotor 12 mittels der elektrischen Antriebsmaschine 26 prophylaktisch gestartet, da ein Anfahrerschwernisgrund vorliegt.

Anschließend, wenn der Verbrennungsmotor 12 läuft, wird im Schritt S15 die zweite Reibkupplung 18 wieder geöffnet, und im Schritt S16 wird die Anfahrgangstufe 2 in dem zweiten Teilgetriebe 22 wieder eingelegt.

Nach dem Schritt S16 geht das Verfahren 60 über zum Schritt S6, in dem wie oben beschrieben abgefragt wird, ob ein Anfahren gewünscht ist, beispielsweise durch Abfrage des Bremspedalsensors 38.

In Fig. 3 ist ein weiteres Verfahren zum Ansteuern des Hybrid-Antriebsstranges 10 der Fig. 1 und generell mit 70 bezeichnet.

Das Verfahren geht nach einem Start aus von einem Schritt S10', bei dem ein Anfahren mittels der elektrischen Antriebsmaschine 26 erfolgt. Der Schritt S10' kann beispielsweise dem Schritt S10 der Fig. 1 entsprechen, wobei jedoch der Verbrennungsmotor in diesem Fall noch nicht eingeschaltet ist, sondern gestoppt ist.

Folglich wird in einem dem Schritt S10' folgenden Schritt S20 abgefragt, ob ein Start des Verbrennungsmotors 12 gefordert ist.

Wenn dies nicht der Fall ist, geht das Verfahren 70 über zum Beginn des Schrittes S20, so dass eine Schleife eingerichtet wird.

Der Schritt S20 wird insbesondere dann durchgeführt, wenn das mit dem Antriebsstrang ausgestattete Kraftfahrzeug bereits mit einer Schrittgeschwindigkeit fährt, die beispielsweise in einem Bereich größer als 0,5 km/h und kleiner gleich 7 km/h liegen kann.

Sofern im Schritt S20 festgestellt wird, dass ein Anlassen des Verbrennungsmotors 12 gefordert ist, wird in einem Schritt S9' abgefragt, ob ein Leistungsanforderungssignal größer ist als ein Leistungs-Schwellenwert. Wenn dies der Fall ist, wird der Verbrennungsmotor in einem darauffolgenden Schritt S11' unmittelbar mittels des Anlassers 30 gestartet.

Wenn in dem Schritt S9' das Leistungsanforderungssignal nicht größer ist als der Leistungs-Schwellenwert, wird im Schritt S24 weiter mit der elektrischen Antriebsmaschine 26 beschleunigt.

Nach dem Schritt S20 wird andererseits auch abgefragt, ob die Geschwindigkeit des Kraftfahrzeuges größer ist als ein Anschlepp-Schwellenwert, der beispielsweise der obere Grenzwert des oben genannten Schrittgeschwindigkeitsbereiches sein kann. Dies erfolgt im Schritt S21. Wenn dies nicht der Fall ist, das Fahrzeug sich also nach wie vor mit Schrittgeschwindigkeit bewegt, erfolgt im Schritt S22 weiterhin ein Beschleunigen mittels der elektrischen Antriebsmaschine 26, und das Verfahren geht zum Ausgangspunkt der Schritte S21, S9' zurück.

Wenn hingegen im Schritt S21 festgestellt wird, dass die Fahrzeuggeschwindigkeit den Anschlepp-Schwellenwert erreicht bzw. überschritten hat, erfolgt im Schritt S23 ein Kupplungsstart, bei dem in dem ersten Teilgetriebe 20 eine Anschlepp-Gangstufe eingelegt wird und anschließend die erste Reibkupplung 16 geschlossen wird, so dass der Verbrennungsmotor 12 über das erste Teilgetriebe 20 und die erste Reibkupplung 16 gestartet wird.

Gegebenenfalls kann hierbei die Leistung der elektrischen Antriebsmaschine 26 kurzzeitig erhöht werden, um die Schleppverluste auszugleichen, die beim Starten des Verbrennungsmotors 12 entstehen.

Die obigen Verfahren gehen vorzugsweise davon aus, dass im Stillstand des Kraftfahrzeuges und beim Starten des Hybrid-Antriebsstranges 10 primär ein solcher Betriebsmodus eingerichtet ist, bei dem ein elektrisches Anfahren möglich ist. Vorzugsweise wird ferner die volle Leistung der elektrischen Antriebsmaschine 26 genutzt, um das Fahrzeug schnellstmöglich über die Kupplungsstartschwelle hinaus zu beschleunigen (Schritt S21). Hierbei kann ggf. ein ruppiges Startverhalten akzeptiert werden. Bei Teillast reicht ohnehin ein rein elektrisches Beschleunigen.

Sofern ein Anfahrerschwernisgrund vorliegt, dann wird ebenfalls vorzugsweise mittels der elektrischen Antriebsmaschine gestartet, wobei jedoch prophylaktisch der Verbrennungsmotor mittels der elektrischen Maschine vorab gestartet wird. Hierdurch kann die Belastung des Anlassermotors 30 verringert werden.

Der Start des Verbrennungsmotors 12 mittels des Anlassermotors 16 erfolgt vorzugsweise ausschließlich dann, wenn in einem der Schritte S9, S9' eine Leistungsanforderung im Sinne einer Volllastbeschleunigung gewünscht ist.

Ansonsten wird der Anlassermotor 30 zum Starten des Verbrennungsmotors vorzugsweise nur dann verwendet, wenn beispielsweise ein Ladezustand der Batterie 28 zu niedrig ist, um ein elektrisches Anfahren zu ermöglichen.

Bei dem Verfahren 70 der Fig. 3 ist es bevorzugt, dass die elektrische Maschine bei einer hohen Leistungsanforderung mit Volllast betrieben wird und dann ggf. der Verbrennungsmotor mittels der ersten Reibkupplung 16 gestartet wird, also auch dann vorzugsweise nicht der Anlassermotor verwendet wird. Hierbei kann ggf. in Kauf genommen werden, dass es während des Starts zu einem Ruckeln kommt, da die zum Anfahren bereitgestellte Antriebsleistung der elektrischen Antriebsmaschine 26 kurzfristig reduziert wird, wenn der Verbrennungsmotor 12 gestartet wird.

Das Anschleppen mittels der ersten Reibkupplung erfolgt vorzugsweise mittels der höchsten Gangstufe in dem ersten Teilgetriebe 20, beispielsweise mittels der Gangstufe 7.

Ein Anschleppen mittels der Gangstufe 7 ist vorzugsweise bei niedrigen Geschwindigkeiten möglich. Ein Anschlepp-Schwellenwert kann beispielsweise in einem Bereich von 5 km/h bis 15 km/h liegen, insbesondere in einem Bereich von 5 km/h bis 10 km/h.

## Patentansprüche

1. Verfahren zum Ansteuern eines Hybrid-Antriebsstranges (10) eines Kraftfahrzeuges, wobei der Hybrid-Antriebsstrang (10) einen Verbrennungsmotor (12), eine zum Antrieb des Kraftfahrzeuges dienende elektrische Maschine (26), ein Doppelkupplungsgetriebe mit einer ersten Reibkupplung (16) und einem der ersten Reibkupplung (16) zugeordneten ersten Teilgetriebe (20) und mit einer zweiten Reibkupplung (18) und einem der zweiten Reibkupplung (18) zugeordneten zweiten Teilgetriebe (22) sowie einen elektrischen Anlassermotor (30) für den Verbrennungsmotor (12) aufweist, wobei die elektrische Maschine (26) an einen Eingang von dem zweiten Teilgetriebe (22) angeschlossen ist und wobei das Verfahren, ausgehend von einem Zustand, bei dem das Kraftfahrzeug steht, bei dem der Verbrennungsmotor (12) gestoppt ist, bei dem wenigstens die zweite Reibkupplung (18) geöffnet ist und bei dem in dem zweiten Teilgetriebe (22) eine Anfahrgangstufe (2) eingelegt ist, die Schritte aufweist:
- Erfassen (S1-S5), ob ein Anfahrerschwernisgrund vorliegt,
- falls der Anfahrerschwernisgrund vorliegt, Schalten (S12) des zweiten Teilgetriebes (22) in einen Neutralzustand, Schließen (S13) der zweiten Reibkupplung (18), Starten (S14) des Verbrennungsmotors (12) mittels der elektrischen Maschine (26), Öffnen (S15) der zweiten Reibkupplung (18) und Einlegen der Anfahrgangstufe (2) in dem zweiten Teilgetriebe (22), und anschließend Abfragen (S6), ob ein Anfahren gewünscht ist, und
- falls der Anfahrerschwernisgrund nicht vorliegt, Abfragen (S6), ob ein Anfahren gewünscht ist.

2. Verfahren nach Anspruch 1, wobei für den Fall, dass ein _eistungsanforderungssignal nicht größer ist als ein Leistungs-Schwellenwert, das Kraftfahrzeug mittels der elektrischen Maschine (26) über eine Anfahrgangstufe (2) in dem zweiten Teilgetriebe (22) angefahren (S10) wird.

3. Verfahren nach einem der Ansprüche 1 bis 2, wobei der Anfahrerschwernisgrund vorliegt, wenn (S2) ein Gewicht des Kraftfahrzeuges größer ist als ein Gewichts-Schwellenwert und/oder wenn (S3) eine Steigung einer Fahrbahn, auf der das Kraftfahrzeug steht, größer ist als ein Steigungs-Schwellenwert, und/oder wenn (S4) ein Alter einer den Anlassermotor (30) speisenden Batterie (32) größer ist als ein Alters-Schwellenwert und/oder wenn ein Alter einer die elektrische Maschine (26) speisenden Batterie (28) größer ist als ein Alters-Schwellenwert und/oder wenn (S5) eine Anzahl von Verbrennungsmotor-Starts mittels des Anlassermotors größer ist als ein Anlasserstartanzahl-Schwellenwert und/oder wenn (S1) eine Sonderbedingung vorliegt.

4. Hybrid-Antriebsstrang für ein Kraftfahrzeug, der einen Verbrennungsmotor (12), eine zum Antrieb des Kraftfahrzeuges dienende elektrische Maschine (26), ein Doppelkupplungsgetriebe mit einer ersten Reibkupplung (16) und einem der ersten Reibkupplung (16) zugeordneten ersten Teilgetriebe (20) und mit einer zweiten Reibkupplung (18) und einem der zweiten Reibkupplung (18) zugeordneten zweiten Teilgetriebe (22) sowie einen elektrischen Anlassermotor (30) für den Verbrennungsmotor (12) aufweist, wobei die elektrische Maschine (26) an einen Eingang von dem zweiten Teilgetriebe (22) angeschlossen ist, und mit einem Steuergerät, das dazu ausgelegt und dazu eingerichtet ist, ein Verfahren nach einem der Ansprüche 1 bis 3 durchzuführen.

## Claims

1. Method for controlling a hybrid drive train (10) of a motor vehicle, wherein the hybrid drive train (10) has an internal combustion engine (12), an electrical machine (26) which serves to drive the motor vehicle, a double-clutch gearbox with a first friction clutch (16) and a first component gearbox (20) that is associated with the first friction clutch (16) and with a second friction clutch (18) and a second component gearbox (22) that is associated with the second friction clutch (18), and also an electric starter motor (30) for the internal combustion engine (12), wherein the electrical machine (26) is connected to an input of the second component gearbox (22), and wherein the method, starting from a state in which the motor vehicle is stationary, in which the internal combustion engine (12) is stopped, in which at least the second friction clutch (18) is open and in which a starting gear stage (2) is engaged in the second component gearbox (22), comprises the steps of:
- detecting (S1-S5) whether a reason for starting difficulties is present,
- if the reason for starting difficulties is present, shifting (S12) the second component gearbox (22) to a neutral state, closing (S13) the second friction clutch (18), starting (S14) the internal combustion engine (12) by means of the electrical machine (26), opening (S15) the second friction clutch (18) and engaging the starting gear stage (2) in the second component gearbox (22), and then checking (S6) whether starting is desired, and
- if the reason for starting difficulties is not present, checking (S6) whether starting is desired.

2. Method according to Claim 1, wherein, in the case of a power demand signal not being greater than a power threshold value, the motor vehicle is started (S10) by means of the electrical machine (26) via a starting gear stage (2) in the second component gearbox (22).

3. Method according to either of Claims 1 and 2, wherein the reason for starting difficulties is present when (S2) a weight of the motor vehicle is greater than a weight threshold value and/or when (S3) a gradient of a roadway on which the motor vehicle is situated is greater than a gradient threshold value and/or when (S4) an age of a battery (32) that feeds the starter motor (30) is greater than an age threshold value and/or when an age of a battery (28) that feeds the electrical machine (26) is greater than an age threshold value and/or when (S5) a number of internal combustion engine starts by means of the starter motor is greater than a starter starting number threshold value and/or when (S1) a special condition is present.

4. Hybrid drive train for a motor vehicle which has an internal combustion engine (12), an electrical machine (26) which serves to drive the motor vehicle, a double-clutch gearbox with a first friction clutch (16) and a first component gearbox (20) that is associated with the first friction clutch (16) and with a second friction clutch (18) and a second component gearbox (22) that is associated with the second friction clutch (18), and also an electric starter motor (30) for the internal combustion engine (12), wherein the electrical machine (26) is connected to an input of the second component gearbox (22), and comprising a controller which is configured and designed to carry out a method according to one of Claims 1 to 3.

## Revendications

1. Procédé de commande d'une chaîne cinématique hybride (10) d'un véhicule automobile, la chaîne cinématique hybride (10) présentant un moteur à combustion interne (12), une machine électrique (26) servant à l'entraînement du véhicule automobile, une boîte de vitesses à double embrayage comprenant un premier embrayage à friction (16) et une première boîte de vitesses partielle (20) associée au premier embrayage à friction (16) et un deuxième embrayage à friction (18) et une deuxième boîte de vitesses partielle (22) associée au deuxième embrayage à friction (18) ainsi qu'un moteur de démarreur électrique (30) pour le moteur à combustion interne (12), la machine électrique (26) étant raccordée à une entrée de la deuxième boîte de vitesses partielle (22) et le procédé, partant d'un état dans lequel se trouve le véhicule automobile, dans lequel le moteur à combustion interne (12) est arrêté, dans lequel au moins le deuxième embrayage à friction (18) est ouvert et dans lequel un rapport de transmission de démarrage (2) est enclenché dans la deuxième boîte de vitesses partielle (22), présentant les étapes suivantes :
- détection (S1-S5) pour savoir s'il existe un motif d'empêchement de démarrage,
- au cas où il existe un motif d'empêchement de démarrage, commutation (S12) de la deuxième boîte de vitesses partielle (22) à un état neutre, fermeture (S13) du deuxième embrayage à friction (18), démarrage (S14) du moteur à combustion interne (12) au moyen de la machine électrique (26), ouverture (S15) du deuxième embrayage à friction (18) et enclenchement du rapport de transmission de démarrage (2) dans la deuxième boîte de vitesses partielle (22), et ensuite interrogation (S6) pour déterminer si un démarrage est souhaité, et
- si le motif d'empêchement de démarrage n'existe pas, interrogation (S6) pour déterminer si un démarrage est souhaité.

2. Procédé selon la revendication 1, dans lequel, au cas où un signal de demande de puissance n'est pas supérieur à une valeur seuil de puissance, le véhicule automobile est démarré (S10) au moyen de la machine électrique (26) par le biais d'un rapport de transmission de démarrage (2) dans la deuxième boîte de vitesses partielle (22).

3. Procédé selon l'une quelconque des revendications 1 à 2, dans lequel le motif d'empêchement de démarrage existe si (S2) un poids du véhicule automobile est supérieur à une valeur seuil de poids et/ou si (S3) une pente ascendante d'une chaussée sur laquelle se trouve le véhicule automobile est supérieure à une valeur seuil de pente ascendante, et/ou si (S4) un âge d'une batterie (32) alimentant le moteur de démarreur (30) est supérieur à une valeur seuil d'âge et/ou si un âge d'une batterie (28) alimentant la machine électrique (26) est supérieur à une valeur seuil d'âge et/ou si (S5) un nombre de démarrages du moteur à combustion interne au moyen du moteur de démarreur est supérieur à une valeur seuil de nombre de démarrages du démarreur et/ou si (S1) des conditions particulières existent.

4. Chaîne cinématique hybride pour un véhicule automobile, qui présente un moteur à combustion interne (12), une machine électrique (26) servant à entraîner le véhicule automobile, une boîte de vitesses à double embrayage comprenant un premier embrayage à friction (16) et une première boîte de vitesses partielle (20) associée au premier embrayage à friction (16) et un deuxième embrayage à friction (18) et une deuxième boîte de vitesses partielle (22) associée au deuxième embrayage à friction (18) ainsi qu'un moteur de démarreur électrique (30) pour le moteur à combustion interne (12), la machine électrique (26) étant raccordée à une entrée de la deuxième boîte de vitesses partielles (22), et comprenant un appareil de commande qui est conçu et prévu pour mettre en œuvre un procédé selon l'une quelconque des revendications 1 à 3.
